# EUROPÄISCHE PATENTSCHRIFT

(11) **EP 0 770 011 B1**
(45) Veröffentlichungstag und Bekanntmachung des Hinweises auf die Patenterteilung: **22.03.2000**
(21) Anmeldenummer: 95924964.0
(22) Anmeldetag: 03.07.1995
(51) Int. Cl.: B60S 1/52, B05B 1/32

(54) **SPRITZVORRICHTUNG FÜR EINE SCHEIBENREINIGUNGSANLAGE EINES KRAFTFAHRZEUGES**
SPRAYING DEVICE FOR A WINDSCREEN WASHING SYSTEM OF A MOTOR VEHICLE
DISPOSITIF DE PULVERISATION POUR LE SYSTEME LAVE-GLACE D'UN VEHICULE AUTOMOBILE

(30) Priorität: 08.07.1994 DE 4424075
(43) Veröffentlichungstag der Anmeldung: 02.05.1997
(73) Patentinhaber: ITT Automotive Europe GmbH, 60488 Frankfurt am Main (DE)
(72) Erfinder: KRIZEK, Oldrich, D-74321 Bietigheim-Bissingen (DE); LANGENFELDER, Jörg, D-74081 Heilbronn (DE); OEHLER, Gerhard, D-74392 Freudental (DE)
(74) Vertreter: Dreiss, Fuhlendorf, Steimle & Becker
(86) Internationale Anmeldenummer: EP9502568
(87) Internationale Veröffentlichungsnummer: WO9601755

(56) Entgegenhaltungen:
- EP-A- 0 597 344
- DE-A- 2 439 226
- DE-A- 3 907 980

## Beschreibung

Die Erfindung bezieht sich auf eine Spritzvorrichtung für eine Scheibenreinigungsanlage eines Kraftfahrzeuges mit den Merkmalen des Oberbegriffs des Anspruchs 1.

Aus den beiden Druckschriften DE 39 07 980 A1 und DE 39 35 318 A1 sind bereits derartige Spritzvorrichtungen bekannt. In beiden Fällen ist ein gummielastisches Düsenelement formschlüssig oder kraftschlüssig an einem formstabilen Düsenkörper befestigt. Das Düsenelement verfügt dabei über eine schlitzartige Mündung, welche von zwei aufeinanderliegenden elastischen Lippen gebildet wird. Im Normalfall ist die Mündung geschlossen, sie wird beim Betrieb der Spritzvorrichtung durch den Druck der Waschflüssigkeit geöffnet. Das Düsenelement selbst ist entweder mit einem rohrförmigen Abschnitt in einer zylindrischen Durchgangsbohrung des Düsenkörpers angeordnet und mittels eines radialen Flansches an dem der Mündung abgewandten Ende formschlüssig an dem Düsenkörper gehalten oder es ist an der Flüssigkeitsaustrittsseite des Düsenkörpers stirnseitig in einer ent-sprechenden Aufnahme mittels eines zusätzlichen Halteelementes in Form eines Sicherungsringes kraftschlüssig fixiert. Der Düsenkörper wiederum besitzt einen kugeligen Teil, in welchem er in einer entsprechenden Aufnahme so in dem Düsengehäuse der Spritzvorrichtung gelagert ist, daß er in einen gewissen räumlichen Bereich schwenkbar ist. Innerhalb des Düsenkörpers verläuft mindestens ein Kanal, durch welchen die Waschflüssigkeit bis zu dem Düsenkörper transportiert wird.

Eine solche Spritzvorrichtung verfügt über die Vorteile einer universellen Anwendbarkeit aufgrund der räumlichen Verschwenk-barkeit des Düsenkörpers sowie der Verhinderung des Einfrierens der Düse aufgrund der im Normalfall geschlossenen elastischen Mündung und der gleichzeitigen Ventilwirkung des elastischen Düsenelementes, welche das Rücklaufen der Wasch-flüssigkeit aus der Zuleitung in den Waschflüssigkeitsbehälter verhindert. Neben diesen Vorteilen weisen diese bekannten Spritzvorrichtungen auch Nachteile auf. Einerseits ist die Bestückung des Düsenkörpers mit dem gummielastischen Düsen-melement ein ziemlich umständlicher und aufwendiger Prozeß, der nur schlecht automatisierbar ist. Andererseits besteht die Gefahr, daß beim Handhaben der vormontierten Düseneinheit aus Düsenkörper und daran fixiertem Düsenelement im Zusammenhang mit der Montage der Düseneinheit an dem Düsengehäuse der Spritzvorrichtung oder beim Einstellen der Düseneinheit zum Ausrichten des Spritzstrahles das gummielastische Düsenelement ungewollt von dem Düsenkörper abgelöst wird. Die Spritzvorrichtung wird dadurch unbrauchbar.

Die EP-A-0 597 344 betrifft einen Brausekopf mit einer Düsenplatte, die eine in dem Brausegehäuse vorgesehene Wasserkammer ausgangsseitig abschließt und eine Vielzahl aus gummielastischem Material gebildete, ständig offene, hinsichtlich der Strahlrichtung nicht veränderbare, schlauchartige Wasserstrahldüsen beinhaltet. Um der Düsenplatte bei relativ geringer Materialdicke die erforderliche Stabilität zu verleihen, ist eine Trägerplatte aus formstabilem Kunststoffmaterial vorgesehen, in deren Vielzahl von Durchtrittsöffnungen die gummielastischen Wasserstrahldüsen eingespritzt sind.

Mit der DE-A-24 39 226 ist eine Düse mit elastischem Düsenkörper für den Anschluß an vornehmlich metallischen Zuleitungen bekannt geworden.

Aufgabe der Erfindung ist es, die Herstellung einer eingangs beschriebenen Spritzvorrichtung zu vereinfachen und ihre Funktionssicherheit zu erhöhen.

Erfindungsgemäß wird die Aufgabe durch eine Spritzvorrichtung mit den Merkmalen des Oberbegriffs des Anspruchs 1 gelöst, bei welcher der formstabile Düsenkörper und das gummielastische Düsenelement durch Anspritzen oder Anvulkanisieren an ihrer zylindrischen Berührungsfläche derartig unlösbar miteinander verbunden sind, daß sie gewissermaßen eine einteilige Düseneinheit bilden.

Unter Anspritzen ist hierbei eine Form des Spritzgießens zu verstehen, bei welcher an einen in einem ersten Schritt aus einer ersten Materialkomponente hergestellten Körper in einem zweiten Schritt ein zweiter Körper aus einer zweiten Material-komponente angeformt und dabei mit diesem gewissermaßen stoff-lich verbunden wird. Dieser Prozeß kann dabei nacheinander in zwei verschiedenen Spritzgießformen oder innerhalb einer einzigen veränderbaren Spritzgießform erfolgen. Weitere Beschrei-bungen der Herstellungsmöglichkeiten sind an dieser Stelle nicht erforderlich, da diese der Fachwelt hinreichend bekannt sind. Die Methode des Anvulkanisierens mit ihren verschiedenen Möglichkeiten ist der Fachwelt ebenfalls so bekannt, daß dazu im Zusammenhang mit der vorliegenden Erfindung keine weiteren Ausführungen erforderlich sind.

Die Vorteile der Erfindung sind darin zu sehen, daß die Herstellung der für die Spritzvorrichtung benötigten Düseneinheit sehr einfach und kostengünstig ist und das durch die unlösbare Verbindung von Düsenkörper und Düsenelement die Handhabung der Düseneinheit wesentlich verbessert ist. Eine ungewollte Zerstörung der Düseneinheit ist nicht zu befürchten, wodurch die Funktionssicherheit der Spritzvorrichtung wesentlich verbessert wird.

Bei der Erfindung berühren sich der Düsenkörper und das Düsenelement mit ihren verhältnismäßig großen zylindrischen Berührungsflächen. Dadurch, daß die Verbindung beider Körper auf dieser großen Berührungsfläche erfolgt, ist diese Verbindung besonders intensiv und damit stabil.

Etwas einfacher und günstiger herstellbar ist eine Düseneinheit mit stirnseitigen Berührungsflächen von Düsenkörper und Düsenelement. Dabei wird bei einer flanschartigen Ausbildung der betreffenden Stirnflächen eine Vergrößerung der Berührungsflächen und somit eine sicherere Verbindung von Düsenkörper und Düsenelement bewirkt.

Um die Einstellbarkeit des Düsenelementes bei am Fahrzeug angebauter Spritzvorrichtung zu verbessern, insbesondere dann, wenn die Düseneinheit um ihre geometrische Achse verdreht werden muß, wird eine Ausbildung der Düseneinheit bzw. des Düsenkörpers empfohlen, bei der der Düsenkörper mit Mitteln zum Angriff eines Werkzeugs versehen ist. In den Ansprüchen 3 - 5 sind verschiedene mögliche Werkstoffpaarungen von Düsenkörper und Düsenelement und eine jeweils günstige Art für deren unlösbare Verbindung miteinander angegeben. Besonders bevorzugt wird hierbei die Ausführung gemäß Anspruch 3. wonach der Düsenkörper aus einem hitzebeständigen Thermoplast und das Düsenelement insbesondere aus Silikon-kautschuk besteht und beide durch anvulkanisieren miteinander unlösbar verbunden sind.

Nachstehend wird die Erfindung an zwei Ausführungsbeispielen näher erläutert. Die dazugehörigen Zeichnungen zeigen:
- Fig. 1: eine Spritzvorrichtung mit mehreren Düsen in teilweise geschnittener Darstellung,
- Fig. 2: in vergrößerter Darstellung eine einzelne Düseneinheit in Halbschnittdarstellung,
- Fig. 3: eine Ansicht der Düseneinheit aus Figur 2 in Blickrichtung des Pfeiles III und

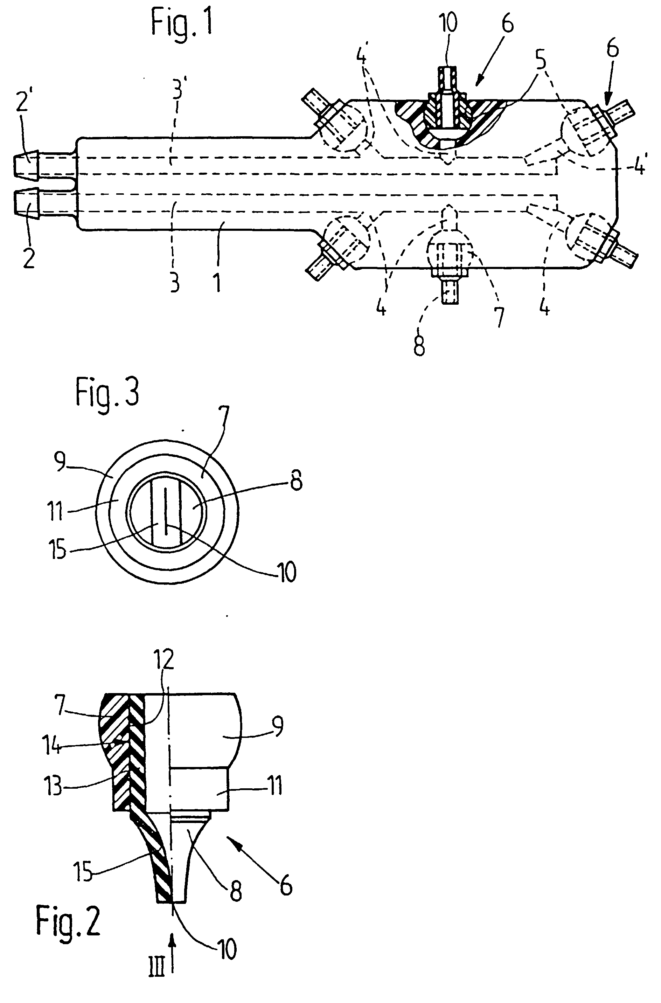

In Figur 1 ist mit 1 ein Düsengehäuse einer Spritzvorrichtung einer nicht näher dargestellten Scheibenreinigungsanlage eines Kraftfahrzeuges bezeichnet, das an einem Wischarm eines Scheibenwischers zu befestigen ist und gemeinsam mit diesem die für das Wischen erforderliche Schwenkbewegung ausführt. Das üblicherweise aus Kunststoff hergestellte Düsengehäuse 1 besitzt zwei Schlauchanschlußstutzen 2 und 2', an die jeweils ein zuleitungaschlauch für Waschflüssigkeit anschließbar ist. Von jedem Anschlußstutzen 2, 2' erstreckt sich ein Kanal 3, 3' durch das Düsengehäuse 1 und verzweigt sich in mehrere Aus-gänge 4, 4'. An jedem Ausgang 4, 4' eines Kanales 3, 3' be-findet sich in dem Düsengehäuse 1 eine kugelige Aufnahme 5 für eine Düseneinheit 6. Jede Düseneinheit 6 besteht aus einem formstabilen Düsenkörper 7 und einem unlösbar mit diesem verbundenen gummielastischen Düsenelement 8. Der Düsenkörper 7 besitzt einen kugeligen Teil 9 (Figur 2), mit welchem er räumlich schwenkbar in die kugelige Aufnahme 5 des Düsengehäuses 1 eingesetzt ist.

In Abhängigkeit von der Schwenkrichtung des Scheibenwischers ist bei Funktion der Scheibenreinigungsanlage entweder der Kanal 3 oder der Kanal 3' mit Waschflüssigkeit beaufschlagbar. Dadurch wird erreicht, daß die Waschflüssigkeit jeweils in Bewegungsrichtung des Wischblattes vor diesem auf die zu reinigende Scheibe gespritzt wird.

Der Druck der geförderten Waschflüssigkeit öffnet die Mündung 10 der jeweils beaufschlagten Düseneinheitert 6, die im Normalzustand geschlossen ist.

Weitere Einzelheiten der Erfindung sind aus den Figuren 2 und 3 ersichtlich.

Aus den Figuren 2 und 3 ist eine Düseneinheit 6 ersichtlich, deren Düsenkörper 7 aus einem hitzbeständigen Thermoplast, insbesondere Polyphenylensulfid (PPS), gefertigt ist und der im wesentlichen aus einem kugeligen Teil 9 mit einem axialen zylindrischen Fortsatz 11 besteht. Der Düsenkörper 7 besitzt außerdem eine zentrale zylindrische Durchgangsöffnung 12, in welcher der rahrförmige Schaft 13 des aus Silikonkautschuk hergestellten gummielastischen Düsenelementes 8 angeordnet ist. Düsenkörper 7 und Düsenelement 8 sind an ihrer gemeinsamen zylindrischen Berührungsfläche 14 durch anvulkanisieren unlösbar miteinander verbunden. Der rohrförmige Schaft des Düsenelementes 8 ragt geringfügig axial aus der zylindrischen Durchgangsöffnung 12 hervor und geht dann in die beiden flachen Lippen 15 über, welche die schlitzartige Mündung 10 des Düsenelementes bilden.

Beim Betrieb der Scheibenreinigungsanlage bzw. der Spritzvorrichtung werden die länglichen elastischen Lippen 15 des Düsenelementes 8 durch den Förderdruck der Reinigungsflüssigkeit soweit auseinandergespreizt, daß die schlitzartige Mündung 10 zeitweise geöffnet wird. Die Mündung 10 wird dabei soweit geöffnet, daß die Reinigungsflüssigkeit in bekannter Weise als Spritzstrahl auf die zu reinigende Scheibe gelangen kann. Bei nachlassendem Förderdruck der Reinigungsflüssigkeit verschließt sich die Mündung 10 selbstätig durch die elastischen Rückstellkräfte der Lippen 15.

### Bezugszeichenliste

- 1: - Düsengehäuse
- 2: - Schlauchanschlußstutzen
- 2': - Schlauchanschlußstutzen
- 3: - Kanal
- 3': - Kanal
- 4: - Ausgang (des Kanals)
- 4': - Ausgang (des Kanals)
- 5: - (kugelige) Aufnahme
- 6: - Düseneinheit
- 7: - (formstabiler) Düsenkörper
- 8: - (gummielastisches) Düsenelement
- 9: - kugeliger Teil
- 10: - Mündung
- 11: - zylindrischer Fortsatz
- 12: - (zylindrische) Durchgangsöffnung
- 13: - (rohrförmiger) Schaft
- 14: - zylindrische Berührungsfläche
- 15: - Lippe

## Patentansprüche

1. Spritzvorrichtung für eine Scheibenreinigungsanlage eines Kraftfahrzeuges mit einem an der Fahrzeugkarosserie oder am Scheibenwischer zu befestigenden Düsengehäuse (1) mit mindestens einem Kanal( 3, 3') für den Transport von Waschflüssigkeit, an dessen Ausgang eine Düseneinheit(6), bestehend aus einem formstabilen Düsenkörper (7) und einem gummielastischen Düsenelement (8), räumlich verschwenkbar in dem Düsengehäuse (1) gelagert ist, wobei das Düsenelement (8) eine schlitzartige, im Normalzustand geschlossene Mündung (10) besitzt, die von zwei aufeinanderliegenden elastischen Lippen (15) gebildet wird und die beim Betrieb durch den Druck der Waschflüssigkeit geöffnet wird, wobei der Düsenkörper (7) im wesentlichen aus einem kugeligen Teil (9) mit einem axialen zylindrischen Fortsatz (11) besteht und eine zentrale zylindrische Durchgangsöffnung (12) besitzt und das gummielastische Düsenelement (8) mit einem rohrförmigen Schaft (13) im wesentlichen in der Durchgangsöffnung (12) des Düsenkörpers (7) steckt, wobei die die schlitzartige Mündung (10) bildenden Lippen (15) des Düsenelementes (8) außerhalb der Durchgangsöffnung (12) axial von dem Schaft (13) des Düsenelementes (8) abstehen, dadurch **gekennzeichnet,** daß der formstabile Düsenkörper (7) und das gummielastische Düsenelement (8) durch Anspritzen oder Anvulkanisieren an ihrer zylindrischen Berührungsfläche (14) derartig unlösbar miteinander verbunden sind, daß sie eine quasieinteilige Düseneinheit (6) bilden.

2. Spritzvorrichtung nach Anspruch 1, dadurch **gekennzeichnet,** daß der zylindrische Fortsatz (11) des Düsenkörpers (7) mit Mitteln, wie beispielsweise Anflächungen oder Vorsprünge, zum Angriff eines Werkzeuges oder Hilfsmittels zum Verstellen der Düseneinheit (6) versehen ist.

3. Spritzvorrichtung nach einem der Ansprüche 1 - 2, dadurch **gekennzeichnet,** daß der Düsenkörper (7) aus einem hitzebeständigen Thermoplast, insbesondere Polyphenylensulfid (PPS), und das Düsenelement (8) aus einem Elastomer, insbesondere Silikonkautschuk (VMQ) besteht und daß Düsenkörper (7) und Düsenelement (8) durch Anvulkanisieren, insbesondere durch Anvulkanisieren des Düsenelementes (8) an den Düsenkörper (7), miteinander unlösbar verbunden sind.

4. Spritzvorrichtung nach einem der Ansprüche 1 - 2, dadurch **gekennzeichnet,** daß der Düsenkörper (7) aus einem harten Elastomer, beispielsweise mit einer Härte von ca. 90 Shore A, und das Düsenelement (8) aus einem weichen Elastomer, beispielsweise mit einer Härte von ca. 50 Shore A, besteht und daß Düsenkörper (7) und Düsenelement (8) durch Anvulkanisieren, insbesondere durch Anvulkanisieren des Düsenelementes (8) an den Düsenkörper (7), miteinander unlösbar verbunden sind.

5. Spritzvorrichtung nach einem der Ansprüche 1 - 2, dadurch **gekennzeichnet,** daß der Düsenkörper (7) aus einem Thermoplast, insbesondere Polypropylen (PP), und das Düsenelement (8) aus einem Thermoplastischen Elastomer (TPO) besteht und daß Düsenkörper (7) und Düsenelement (8) durch Anspritzen, insbesondere durch Anspritzen des Düsenelementes (8) an den Düsenkörper (7), miteinander unlösbar verbunden sind.

## Claims

1. A spray device for a window washing system of a motor vehicle, having a nozzle housing (1), which is to be fastened on the vehicle body or the window wiper, with at least one conduit (3, 3') for the conveyance of washer fluid, in whose outlet a nozzle unit (6), consisting of a dimensionally stable nozzle body (7) and a rubber-elastic nozzle element (8), is seated in a spatially pivotable manner in the nozzle housing (1), wherein the nozzle element (8) has a slit-shaped mouth (10), which is closed under normal conditions and is formed by two resilient lips (15) resting on each other, and which is opened during operation by the pressure of the washer fluid, wherein the nozzle body (7) essentially consists of a spherical part (9) with an axial cylindrical extension (11) and has a central cylindrical passage (12), and the rubber-elastic nozzle element (8) is essentially arranged with a tube-shaped shaft (13) in the passage (12) of the nozzle body (7), wherein the lips (15) of the nozzle element (8) constituting the slit-shaped opening (10) project axially away from the shaft (13) of the nozzle element (8) outside of the passage (12), characterized in that the dimensionally stable nozzle body (7) and the rubber-elastic nozzle element (8) are undetachably connected with each other by being molded or vulcanized together at their cylindrical contact surface (14) in such a way, that they constitute a quasi one-piece nozzle unit (6).

2. The spray device in accordance with claim 1,
characterized in that the cylindrical extension (11) of the nozzle body (7) is provided with means, for example flattenings or protrusions, for engagement with a tool or aids for adjusting the nozzle unit.

3. The spray device in accordance with one of claims 1 or 2,
characterized in that the nozzle body (7) is made of a heat- resistant thermoplastic material, in particular polyphenylene sulfide (PPS), and the nozzle element (8) of an elastomer, in particular silicon caoutchouc (VMQ), and that the nozzle body (7) and the nozzle element (8) are undetachably connected with each other by being vulcanized together, in particular by vulcanizing the nozzle element (8) to the nozzle body (7).

4. The spray device in accordance with one of claims 1 or 2,
characterized in that the nozzle body (7) is made of a hard elastomer, for example of a hardness of approximately 90 Shore A, and the nozzle element (8) of a soft elastomer, for example of a hardness of approximately 50 Shore A, and that the nozzle body (7) and the nozzle element (8) are undetachably connected with each other by being vulcanized together, in particular by vulcanizing the nozzle element (8) to the nozzle body (7).

5. The spray device in accordance with one of claims 1 or 2,
characterized in that the nozzle body (7) consists of a thermoplastic material, in particular polypropylene (PP), and the nozzle element of a thermoplastic elastomer (TPO), and that the nozzle body (7) and the nozzle element (8) are undetachably connected with each other by being molded together, in particular by molding the nozzle element (8) to the nozzle body (7).

## Revendications

1. Dispositif de projection pour un système d'essuieglace de véhicule automobile, comprenant un boîtier de gicleur (1) qui doit être fixé à la carrosserie du véhicule ou à l'essuie-glace et comporte au moins un conduit (3, 3'), pour le transfert de liquide de lavage, à la sortie duquel une unité de gicleur (6), constituée d'un corps de gicleur (7) indéformable et d'un élément de gicleur (8) à élasticité du type caoutchouc, est montée d'une manière orientable dans l'espace dans le boîtier de gicleur (1), l'élément de gicleur (8) présentant un orifice (10) en forme de fente qui est fermé à l'état normal, est formé de deux lèvres (15) élastiques appliquées l'une sur l'autre et est ouvert, en fonctionnement, sous l'effet de la pression du liquide de lavage, tandis que le corps de gicleur (7) est constitué essentiellement d'une partie sphérique (9), comportant une partie en saillie cylindrique axiale (11), et d'un passage cylindrique central (12), et que l'élément de gicleur (8) à élasticité du type caoutchouc s'emboîte essentiellement, par un tronçon de tige tubulaire (13), dans le passage (12) du corps de gicleur (27), les lèvres (15) de l'élément de gicleur (8) qui forment l'orifice (10) en forme de fente faisant saillie axialement, à partir du tronçon de tige (13) de l'élément de gicleur (8), à l'extérieur du passage (12), caractérisé en ce que le corps de gicleur (7) indéformable et l'élément de gicleur (8) à élasticité du type caoutchouc sont reliés l'un à l'autre d'une manière inséparable, par solidarisation par injection ou solidarisation par vulcanisation, à l'endroit de leurs surfaces cylindriques de contact (14), de façon qu'ils forment une unité de gicleur (6) pratiquement d'une seule pièce.

2. Dispositif de projection suivant la revendication 1, caractérisé en ce que la partie en saillie cylindrique (11) du corps de gicleur (7) est pourvue de moyens, tels que par exemple méplats ou saillies, permettant la prise d'un outil ou moyen auxiliaire servant à régler la position de l'unité de gicleur (6).

3. Dispositif de projection suivant l'une des revendications 1 ou 2, caractérisé en ce que le corps de gicleur (7) est en une matière thermoplastique résistant à la chaleur, notamment un polyphénylène sulfure (PPS), et l'élément de gicleur (8) en un élastomère, notamment un caoutchouc de silicone (VMQ), et en ce que le corps de gicleur (7) et l'élément de gicleur (8) sont reliés l'un à l'autre d'une manière inséparable par solidarisation par vulcanisation, notamment par solidarisation par vulcanisation de l'élément de gicleur (8) sur le corps de gicleur (7).

4. Dispositif de projection suivant l'une des revendications 1 ou 2, caractérisé en ce que le corps de gicleur (7) est en un élastomère dur, par exemple possédant une dureté d'environ 90 Shore A, et l'élément de gicleur (8) en un élastomère souple, par exemple possédant une dureté d'environ 50 Shore A, et en ce que le corps de gicleur (7) et l'élément de gicleur (8) sont reliés l'un à l'autre d'une manière inséparable par solidarisation par vulcanisation, notamment par solidarisation par vulcanisation de l'élément de gicleur (8) sur le corps de gicleur (7).

5. Dispositif de projection suivant l'une des revendications 1 ou 2, caractérisé en ce que le corps de gicleur (7) est en une matière thermoplastique, notamment en polypropylène (PP) et l'élément de gicleur (8) en un élastomère thermoplastique (TPO) et en ce que le corps de gicleur (7) et l'élément de gicleur (8) sont reliés l'un à l'autre d'une manière inséparable par solidarisation par injection, notamment par solidarisation par injection de l'élément de gicleur (8) sur le corps de gicleur (7).
